# EUROPEAN PATENT APPLICATION

(11) **EP 4 847 297 A1**
(43) Date of publication of application: **02.12.2026**
(21) Application number: 26180900.8
(22) Date of filing: 26.05.2026
(51) Int. Cl.: B60L 53/16, E05B 1/00, E05B 41/00, E05B 47/00, E05B 81/06, E05B 81/34, E05B 81/90, E05B 85/02

(54) **LOCKING DEVICE AND ELECTRIC VEHICLE**

(30) Priority: 29.05.2025 CN 202510715532
(71) Applicant: Tyco Electronics (Shanghai) Co. Ltd., Shanghai 200131 (CN); Tyco Electronics Technology (SIP) Ltd., Suzhou 215026 (CN)
(72) Inventor: Zhu, Fangyue, Shanghai, 200233 (CN); Wu, Supeng, Suzhou, 32 215123 (CN); Zhou, Qunji, Suzhou, 32 215123 (CN); Wen, Xianwen, Suzhou, 32 215123 (CN)
(74) Representative: Grünecker Patent- und Rechtsanwälte PartG mbB

(57) **Abstract**

A locking device and an electric vehicle comprising the same are disclosed. The locking device comprises: a housing; a carrier disposed in the housing; a driving member disposed in the housing and configured to drive the carrier to move between a locked position and an unlocked position; a first rod disposed on the carrier and configured to protrude from one side of the housing to achieve a locking function when the carrier is located in the locked position, and at least partially retract into the housing to achieve an unlocking function when the carrier is located in the unlocked position; and a second rod disposed on the carrier and configured to protrude from the one side of the housing when the carrier is located in the locked position, so as to be pushed to drive the first rod to at least partially retract into the housing to achieve the unlocking function, so that a user may unlock the locking device when the vehicle is not powered by electricity. The locking device is highly reliable, easy to be operated, compact in size, and safe to use.

## Description

### CROSS-REFERENCE TO RELATED APPLICATION

The present disclosure claims the benefit of Chinese Patent Application Invention No. 2025107155321 filed on May 29, 2025 in the China National Intellectual Property Administration, the whole disclosure of which is incorporated herein by reference.

### BACKGROUND OF THE DISCLOSURE

### Field of the Disclosure

The present disclosure relates to a field of mechanical electronics, and more particularly to a locking device and an electric vehicle.

### Description of the Related Art

A locking device is commonly used in an electric vehicle to lock a charging gun that is charging the electric vehicle. However, in case that the vehicle is not being electrically driven, the locking device fails to be unlocked electrically. At this time, an emergency unlocking function may only be achieved by pulling a pull cord disposed behind the locking device. Due to the cord being placed behind the locking device, there are some drawbacks:
Reduced reliability: as an additional mechanical connection device, the pull cord increases complexity and fault points of the system. The pull cord may be worn, stretched, or broken due to a long-term use, causing the locking device to malfunction, which adversely affects safety of the vehicle.

Inconvenient operation: a driver has to search for where is the pull cord inside the vehicle and has to pull the pull cord forcefully to achieve the unlocking function, which may delay time and adversely affect the driver's timely control of the vehicle in some emergency situations, especially for some poorly designed pull cord layouts, which may cause inconvenience to the driver and even lead to misoperation during the operation process.

Space occupation: pulling cords require a certain amount of space to arrange, which may adversely affect a layout and aesthetics an interior of the vehicle. In the case of relatively limited internal space in the electric vehicle, the presence of the pull cord may make the interior appear more crowded and may interfere with other components, increasing difficulty of design and manufacture of the electric vehicle.

Safety hazard: if the pull cord is exposed in a position that is easily accessible to passengers inside the electric vehicle, the pull cord may be pulled or played with by passengers, causing the locking device to be accidentally unlocked and leading to safety accidents.

Therefore, it is necessary to provide a locking device that is highly reliable, easy to be operated, compact in size, and safe to use.

### SUMMARY OF THE DISCLOSURE

The embodiments of the present disclosure aim to solve at least one aspect of the above-mentioned problems.

According to one aspect of the present disclosure, there is provided locking device, comprising: a housing; a carrier disposed in the housing; a driving member disposed in the housing and configured to drive the carrier to move between a locked position and an unlocked position; a first rod disposed on the carrier and configured to protrude from one side of the housing to achieve a locking function when the carrier is located in the locked position, and at least partially retract into the housing to achieve an unlocking function when the carrier is located in the unlocked position; and a second rod disposed on the carrier and configured to protrude from the one side of the housing when the carrier is located in the locked position, so as to be pushed to drive the first rod to at least partially retract into the housing to achieve the unlocking function. Thus it is convenient for a user to unlock the locking device to rescue people trapped inside the electric vehicle when the vehicle is not powered by electricity. The locking device has a simple structure, easy operation, and the second rod may be made of any wear-resistant and sturdy material (such as metal), which will not wear, stretch or break like a pull cord due to long-term use. Therefore, compared to the traditional pull cord, the second rod has higher reliability. Since the second rod is disposed on the same side (i.e., a front side) of the housing as the first rod, and has a shorter length compared to the traditional pull cord, the second rod does not occupy a large space and has less impact on the layout and aesthetics of the interior of the vehicle. And because the second rod is disposed on the front side of the housing, the second rod will not be pulled or played with by passengers, avoiding accidental unlocking of the locking device and causing safety accidents.

According to one aspect of the present disclosure, the housing comprises: a body configured to accommodate a portion of the carrier provided with the first rod and the driving member; and a lid covering the body and provided with a boss which is configured to accommodate a portion of the carrier provided with the second rod and which extends over only a part of the body to accommodate only the portion provided with the second rod, making volume of the housing relatively compact.

According to one aspect of the present disclosure, the carrier comprises: a first carrier portion comprising a first end provided with the first rod and a second end provided with the second rod; and a second carrier portion accommodated in the body to be operably connected to the driving member and thus be driven by the same. The second end is higher than the body to facilitate installation of the second rod thereon. A specific value by which the second end is higher than the body may be adjusted according to specific needs to accommodate only the second end, avoiding excessive volume of the housing and thus avoiding excessive occupation of an internal space of the electric vehicle.

According to one aspect of the present disclosure, the second carrier portion is provided with engaging teeth; and the driving member comprises a gear set that meshes with the engaging teeth and a motor that drives the gear set.

According to one aspect of the present disclosure, the motor comprises an output shaft; and the gear set comprises: a first gear installed on the output shaft; a second gear meshing with the first gear; and a third gear connecting to the second gear through a connecting shaft and meshing with the engaging teeth, so that the output shaft drives the carrier to move between the locked position and the unlocked position through its own rotation and the meshing between the first gear, the second gear, and the third gear when the motor works.

According to one aspect of the present disclosure, the first carrier portion is provided with a protruding stopper on a side thereof facing away from the first rod and the second rod, the stopper is configured to abut against the connecting shaft to prevent the carrier from further moving when the carrier is moved to the unlocking position.

According to one aspect of the present disclosure, the stopper is configured in a "L" shape, which is provided with a curved surface at a bend thereof that matches the connecting shaft in terms of shape to minimize collision between the connecting shaft and the stopper as much as possible and reduce damage to the connecting shaft and the stopper caused by excessively strong collisions.

According to one aspect of the present disclosure, a first gear and the stopper are located on either side of the connecting shaft.

According to one aspect of the present disclosure, the second gear and the third gear are located on either side of the stopper and face towards each other.

According to one aspect of the present disclosure, the first carrier portion is provided with a bottom plate, which is located on a side of the stopper opposite to the engaging teeth at the first end so that the second gear is located above the bottom plate, so as to provide protection for the second gear to prevent other devices or users' fingers from touching or colliding with the second gear during assembly.

According to one aspect of the present disclosure, the locking device further comprising: a seal disposed between at least one of the first rod and the second rod and the housing to prevent pollutants such as water and debris from entering the housing and causing faults such as short circuits and mechanical component wear in the locking device, thereby improving reliability and durability of the locking device and facilitating its use in harsh environmental conditions such as rain and snow.

According to another aspect of the present disclosure, there is provided an electric vehicle comprising a locking device according to any one of the above aspects.

### BRIEF DESCRIPTION OF THE DRAWINGS

Features of the present disclosure will become more apparent from the detailed description set forth below when taken in conjunction with the drawings, wherein similar reference numbers always indicate corresponding elements. In the drawings, similar reference numbers generally indicate identical, functionally similar, and/or structurally similar elements. Unless otherwise stated, the drawings provided throughout the present disclosure should not be interpreted as drawings drawn to scale.
Fig. 1 is a perspective view of a locking device according to an embodiment of the present disclosure;
Fig. 2 is a top view of the locking device in Fig. 1;
Fig. 3 is a cross-sectional view taken along line III-III in Fig. 2;
Fig. 4 is a perspective view of a carrier and a driving member according to an embodiment of the present disclosure;
Fig. 5 is a perspective view of the carrier and driving member according to an embodiment of the present disclosure, shown from a different visual angle than in Fig. 4; and
Fig. 6 is a perspective view of the individual carrier shown in Fig. 5.

The accompanying drawings, which are incorporated herein and form a part of the specification, illustrate the present disclosure and further serve to explain the principles of the present disclosure together with the description and to enable those skilled in the related art to make and use the embodiments described herein.

### DETAILED DESCRIPTION OF EMBODIMENTS OF THE DISCLOSURE

In order to make the purpose, technical solution, and advantages of the present disclosure clearer and more understandable, the following will provide further detailed explanations of the present disclosure in conjunction with specific embodiments and with reference to the accompanying drawings.

However, it should be understood that these descriptions are only exemplary and are not intended to limit the scope of the present disclosure. In the following detailed description, for purposes of explanation, numerous specific details are set forth in order to provide a thorough understanding of the embodiments of the present disclosure. However, it may be evident that one or more embodiments may be practiced without these specific details. In addition, in the following description, descriptions of well-known structures and techniques are omitted to avoid unnecessarily obscuring the concepts of the present disclosure.

The terminology used herein is only for the purpose of describing specific embodiments, and is not intended to be limiting of the present disclosure. The terms "comprise", "include" and the like used herein indicate the existence of the features, steps, operations and/or components, but do not exclude the existence or addition of one or more other features.

When an expression such as "at least one of A, B, and C, etc." is used, it should generally be interpreted according to the meaning of the expression commonly understood by those skilled in the art (for example, "a system having at least one of A, B, and C" should be interpreted as comprising but not being limited to a system having A alone; a system having B alone; a system having C alone; a system having A and B; a system having A and C; a system having B and C; and/or a system having A, B, and C).

All terms (comprising technical and scientific terms) used herein have meanings commonly understood by those skilled in the art, unless otherwise defined. It should be noted that the terms used herein should be interpreted as having meanings consistent with the context of this specification, and should not be interpreted in an idealized or overly rigid manner.

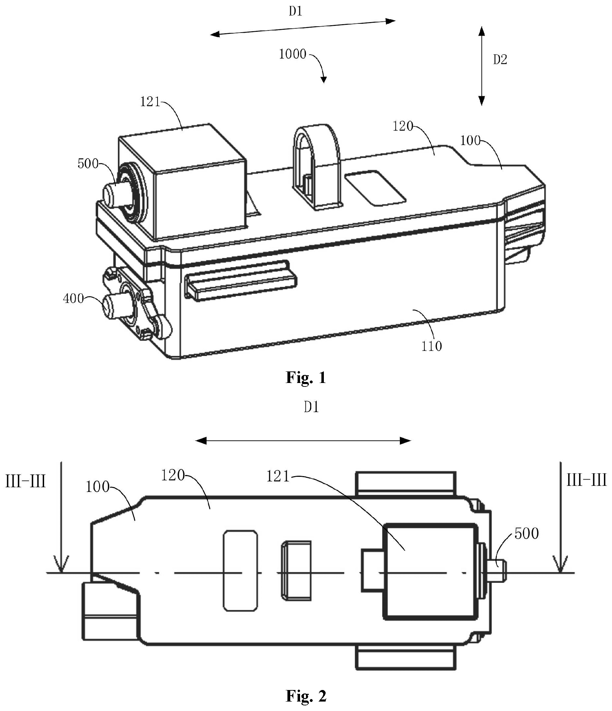

Referring to Figs. 1 to 6, the present disclosure discloses a locking device 1000 and an electric vehicle (not shown in the figure) comprising the same.

The locking device 1000 comprises a housing 100, a carrier 200, a driving member, a first rod 400, and a second rod 500. The housing 100 extends along a first direction D1 (also known as a "longitudinal direction"). The carrier 200 has a height along a second direction D2 (also known as a "height direction") orthogonal to the first direction D1. The carrier 200 is disposed in the housing 100. The driving member is disposed in the housing 100 and configured to drive the carrier 200 to move between a locked position and an unlocked position. The first rod 400 is disposed on the carrier 200 and is configured to protrude from one side (also referred to as a "front side" in this disclosure) of the housing 100 to achieve the locking function when the carrier 200 is located in the locked position, and at least partially retract into the housing 100 to achieve the unlocking function when the carrier 200 is located in the unlocked position. The second rod 500 is disposed on the carrier 200 and configured to protrude from the one side of the housing 100 when the carrier 200 is located in the locked position, so as to be pushed to drive the first rod 400 to at least partially retract into the housing 100 to achieve the unlocking function in emergency situations where the locking device 1000 fails to be electrically driven due to collision, fire, etc. of the electric vehicle, that is, to enable a user to unlock the locking device 1000 to rescue people trapped inside the electric vehicle in the absence of an electric power in the electric vehicle.

The locking device 1000 has a simple structure and easy operation, and the second rod 500 may be made of any wear-resistant and sturdy material (such as metal), which will not be worn, stretched or broken like the pull cord due to long-term use, thus having higher reliability compared to the traditional pull cord. Due to the fact that the second rod 500 and the first rod 400 are located on the same side of the housing 100, i.e., the front side, and have a shorter length compared to the traditional pull cord, the second rod 500 does not occupy a large space and has less impact on a layout and aesthetics an interior of the electric vehicle. Because the second rod 500 is located on the front side of the housing 100, it will not be accidentally pulled or played with by passengers, avoiding safety accidents caused by accidental unlocking of the locking device 1000.

The locking device 1000 also comprises a seal 600. The seal 600 is disposed between at least one of the first rod 400 and the second rod 500 and the housing 100 to prevent pollutants such as water and debris from entering the housing 100 and causing faults such as short circuits and mechanical component wear of the locking device 1000, thereby improving reliability and durability of the locking device 1000 and facilitating its use in harsh environmental conditions such as rain and snow.

Referring to Figs. 1 to 3, the housing 100 comprises a body 110 and a lid 120. The body 110 is configured to accommodate a portion of the carrier 200 provided with the first rod 400 and the driving member. The lid 120 covers the body 110 and is provided with a boss 121, which is configured to accommodate a portion of the carrier 200 provided with the second rod 500 (i.e., the second end 212 described below). The boss 121 extends along the first direction D1 only over a portion of the body 110, to be adapted to accommodate only the portion provided with the second rod 500, making a volume of the housing 100 relatively compact.

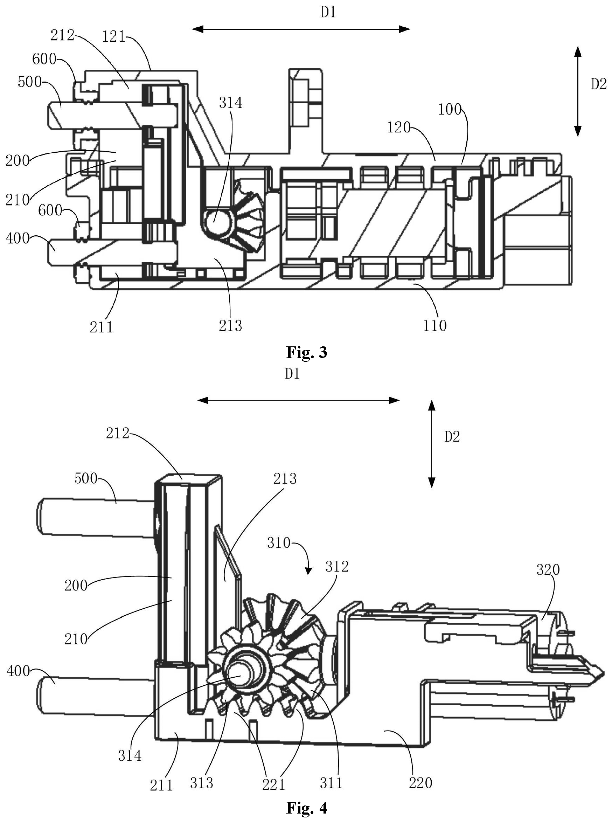

Referring to Figs. 3 to 6, the carrier 200 comprises a first carrier portion 210 extending along the second direction D2 and a second carrier portion 220 extending along the first direction D1. The first carrier portion 210 comprises a first end 211 (also referred to as a "bottom end") provided with the first rod 400 and a second end 212 (also referred to as a "top end") provided with the second rod 500. The second carrier portion 220 is accommodated in the body 110 to be operably connected to the driving member and thus be driven by the same. The second end 212 is higher than the body 110 to facilitate installation of the second rod 500 on the second end 212. The specific value by which the second end 212 is higher than the body 110 may be adjusted according to specific needs. The boss 121 is configured to be adapted to accommodate only the second end 212, avoiding making the volume of the housing 100 too large and thus avoiding excessive occupation of the interior space of the electric vehicle.

Referring to Figs. 4 to 6, the second carrier portion 220 is provided with a plurality of engaging teeth 221 arranged along the first direction D1. The driving member comprises a gear set 310 that meshes with the engaging teeth 221 and a motor 320 that drives the gear set 310. The motor 320 is driven by electricity, and for clarity, a circuit that drives the motor 320 is not shown in the drawing.

Furthermore, the motor 320 comprises an output shaft 321. The gear set 310 comprises a first gear 311, a second gear 312, and a third gear 313. The first gear 311 is installed on the output shaft 321. The output shaft 321 rotates to drive the first gear 311 to rotate when the motor 320 works. The second gear 312 meshes with the first gear 311 to be driven to rotate by the first gear 311. The third gear 313 is connected to the second gear 312 through a connecting shaft 314 to be driven to rotate by the second gear 312. The third gear 313 meshes with the engaging teeth 221 to drive the second carrier portion 220 and the first carrier portion 210 to move back and forth in the first direction D1. The motor 320 transmits power to the carrier 200 through the gear set 310 in this way when the motor 320 is powered on, causing the first rod 400 to move between the locked position and the unlocked position.

Further referring to Figs. 4 to 6, the first carrier portion 210 is provided with a protruding stopper 213 on a side thereof facing away from the first rod 400 and the second rod 500. The stopper 213 extends along the second direction D2 and does not exceed the second end 212 of the second rod 500 to avoid being accommodated by the boss 121, so that the boss 121 may only be configured to accommodate the second end 212 and have a smaller volume. The stopper 213 is configured to abut against the connecting shaft 314 when the carrier 200 is moved to the unlocked position, to prevent the carrier 200 from continuing to move backward in the first direction D1.

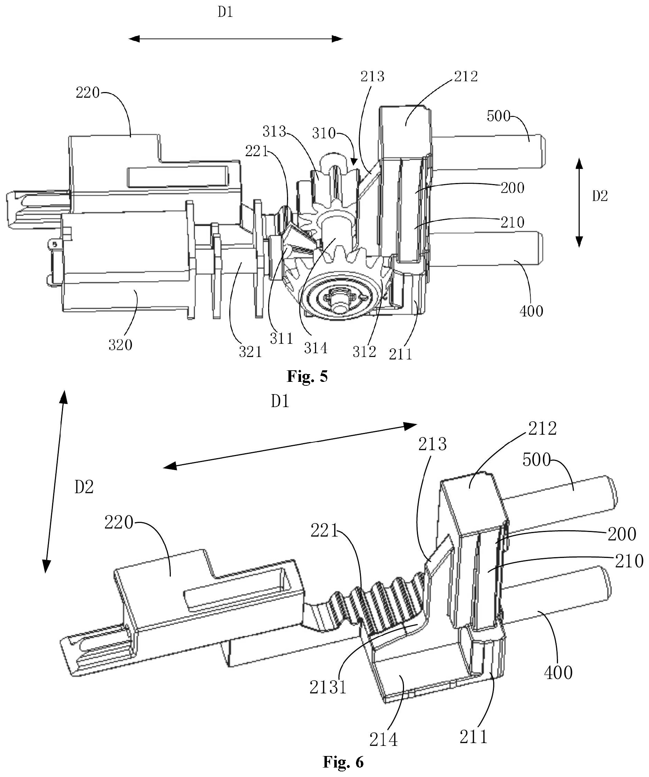

Further referring to Fig. 5, the first gear 311 and the stopper 213 are located on either side of the connecting shaft 314. The second gear 312 and the third gear 313 are located on either side of the stopper 213 and face towards each other. However, those skilled in the art will understand that this is only a specific embodiment of the gear set 310 of the present disclosure, and the number of gears in the gear set 310 and their relative positions are not limited to this. As long as the gear set 310 may transmit the power of the motor 320 to the carrier 200, any suitable arrangement of the gear set 310 may be adopted.

Further referring to Fig. 6, the stopper 213 is configured in a "L" shape, which is provided with a curved surface 2131 at a bend thereof that matches the connecting shaft 314 in terms of shape, in order to minimize the collision between the connecting shaft 314 and the stopper 213 and reduce damage to the connecting shaft 314 and the stopper 213 caused by excessively strong collisions, thereby improving durability of the locking device 1000. The first carrier portion 210 is provided with a bottom plate 214, which is located on a side of the stopper 213 opposite to the engaging teeth 221 at the first end 211, so that the second gear 312 is located above the bottom plate 214 to provide protection for the second gear 312 and prevent other devices or user's fingers from touching or colliding with the second gear 312 during assembly.

So far, the embodiments of the present disclosure have been described in detail with reference to the drawings. It should be noted that the implementations not shown or described in the drawings or the text of the specification are all known to those of ordinary skill in the art and are not described in detail. In addition, the above definition of each of components is not limited to various specific structures, shapes or manners mentioned in the embodiments, and those of ordinary skill in the art may make simple changes or substitutions.

It should also be noted that, in the specific embodiments of the present disclosure, the numerical parameters in this specification and the appended claims are approximate values and may be changed according to the desired characteristics obtained by the content of the present disclosure, unless otherwise specified. In detail, all numbers expressing dimensions, ranges, and so forth used in the specification and the claims are to be understood as being modified in all instances by the term "about." In general, the expressed meaning of numbers is intended to encompass a variation of ± 10% from a specified amount in some embodiments, a variation of ± 5% from a specified amount in some embodiments, a variation of + 1% from a specified amount in some embodiments, and a variation of ± 0.5% from a specified amount in some embodiments.

Those skilled in the art will appreciate that various combinations and/or assemblies of features recited in the various embodiments and/or claims of the present disclosure may be made, even if such combinations and/or assemblies are not explicitly recited in the present disclosure. In particular, various combinations and/or assemblies of features described in various embodiments and/or claims of the present disclosure may be made without departing from the spirit and teachings of the present disclosure. All such combinations and/or assemblies fall within the scope of the present disclosure.

The specific embodiments described above provide further detailed explanations of the objects, technical solutions, and beneficial effects of the present disclosure. It should be understood that the above description is only the specific embodiments of the present disclosure and is not intended to limit the present disclosure. Any modifications, equivalent substitutions, improvements, etc. made within the spirit and principles of the present disclosure should fall within the protection scope of the present disclosure.

## Claims

1. A locking device, **characterized by** comprising:
a housing;
a carrier disposed in the housing;
a driving member disposed in the housing and configured to drive the carrier to move between a locked position and an unlocked position;
a first rod disposed on the carrier and configured to protrude from one side of the housing to achieve a locking function when the carrier is located in the locked position, and at least partially retract into the housing to achieve an unlocking function when the carrier is located in the unlocked position; and
a second rod disposed on the carrier and configured to protrude from the one side of the housing when the carrier is located in the locked position, so as to be pushed to drive the first rod to at least partially retract into the housing to achieve the unlocking function.

2. The locking device according to claim 1, **characterized in that** the housing comprises:
a body configured to accommodate a portion of the carrier provided with the first rod and the driving member; and
a lid covering the body and provided with a boss which is configured to accommodate a portion of the carrier provided with the second rod.

3. The locking device according to claim 1 or 2, **characterized in that** the carrier comprises:
a first carrier portion comprising a first end provided with the first rod and a second end provided with the second rod; and
a second carrier portion accommodated in the body to be operably connected to the driving member and thus be driven by the same.

4. The locking device according to claim 3, **characterized in that**,
the second carrier portion is provided with engaging teeth; and
the driving member comprises a gear set that meshes with the engaging teeth and a motor that drives the gear set.

5. The locking device according to claim 4, **characterized in that**,
the motor comprises an output shaft; and
the gear set comprises: a first gear installed on the output shaft; a second gear meshing with the first gear; and a third gear connecting to the second gear through a connecting shaft and meshing with the engaging teeth.

6. The locking device according to claim 5, **characterized in that**,
the first carrier portion is provided with a protruding stopper on a side thereof facing away from the first rod and the second rod, the stopper is configured to abut against the connecting shaft when the carrier is moved to the unlocking position.

7. The locking device according to claim 6, **characterized in that**,
the stopper is configured in a "L" shape, which is provided with a curved surface at a bend thereof that matches the connecting shaft in terms of shape.

8. The locking device according to claim 6 or 7, **characterized in that**,
a first gear and the stopper are located on either side of the connecting shaft.

9. The locking device according to claim 8, **characterized in that**,
the second gear and the third gear are located on either side of the stopper and face towards each other.

10. The locking device according to any one of claims 6, 7, and 9, **characterized in that**,
the first carrier portion is provided with a bottom plate, which is located on a side of the stopper opposite to the engaging teeth at the first end so that the second gear is located above the bottom plate.

11. The locking device according to any one of claims 1 to 2, 4 to 7, and 9, **characterized by** further comprising:
a seal disposed between at least one of the first rod and the second rod and the housing.

12. An electric vehicle, **characterized by** comprising a locking device according to any one of claims 1 to 11.
